# EUROPEAN PATENT APPLICATION

(11) **EP 4 718 176 A1**
(43) Date of publication of application: **01.04.2026**
(21) Application number: 25187555.5
(22) Date of filing: 04.07.2025
(51) Int. Cl.: G05B 19/042, G05B 19/05, G06F 9/52

(54) **SYSTEM AND METHOD FOR MODIFYING AN APPLICATION DURING EXECUTION ON A SAFETY CONTROLLER**

(30) Priority: 27.09.2024 US 202418898823
(71) Applicant: Rockwell Automation Technologies, Inc., Mayfield Heights, OH 44124 (US)
(72) Inventor: Peelman, Max E., Mayfield Heights, OH, 44124 (US); Cernohrský, Daniel, Mayfield Heights, OH, 44124 (US); Stay, Nicholas L., Milwaukee, WI, 53204 (US); Goldberg, Samuel A., Mayfield Heights, OH, 44124 (US); Shelvik, Norman S., Milwaukee, WI, 53204 (US)
(74) Representative: Grünecker Patent- und Rechtsanwälte PartG mbB

(57) **Abstract**

A safety function executing at a periodic interval on a pair of controllers is modified during execution by preparing a change record for the safety function in response to an edit request. A communication channel is established between a first core on each controller via a dedicated communication interface. The change record is transmitted between the first core of each controller via the communication channel. The change record is transmitted from the first core to a second core of each controller. Preparing the change record, establishing the communication channel, and transmitting the change record combined execute over multiple periodic intervals for the safety function. The change record is stored in a memory of each controller with corresponding second core for the controller. Storing the change record in the memory of both controllers occurs during a single periodic interval for the safety function.

## Description

### BACKGROUND INFORMATION

The subject matter disclosed herein relates to an ability to modify an application executing on a safety controller during execution of the safety controller. More specifically, a deterministic sequence of updating the application on the safety controller permits updates within a predefined safety task interval.

As is known to those skilled in the art, industrial controllers are specialized electronic computer systems used for the control of industrial processes or machinery. An example industrial controller is a programmable logic controller (PLC) used in a factory environment. Industrial controllers differ from conventional computers in a number of ways. Physically, they are constructed to be substantially more robust against shock and damage and to better resist external contaminants and extreme environmental conditions. The processors and operating systems of industrial controllers are optimized for real-time control and execute languages allowing ready customization of programs to comport with a variety of different controller applications. Industrial controllers may have an operator interface for accessing, controlling, and/or monitoring the industrial controller. An example operator interface can include a locally connected terminal having a keyboard, mouse, and display.

One important application of industrial controllers is "safety control." Safety control is used in applications where failure of an industrial controller can create a risk of injury to humans. While safety control is closely related to reliability, safety control places additional emphasis on ensuring correct operation even if it reduces equipment availability. Safety industrial control systems are not optimized for "availability," that is, being able to function for long periods of time without error, but rather for "safety," which is being able to accurately detect error to shut down. Safety industrial controllers normally provide a predetermined safe state for their outputs upon a safety shutdown, the predetermined values of these outputs being intended to put the industrial process into its safest static mode. For that reason, safety controllers may provide run time diagnostic capabilities to detect incorrect operation and to move the control system to predefined "safety states" if a failure is detected. The safety states will depend on the particular process being implemented and will cause the actuators to assume a state predetermined to be safest when control correctness cannot be ensured. For example, upon detection of a failure, an actuator controlling cutting machinery might place that machinery in a stop state while an actuator providing air filtration might retain that machinery in an on state.

Safety control capability may be designated, for example, by "safety integrity levels" (SIL) defined under standard IEC 61508 and administered by the International Electrotechnical Commission (IEC) under rule hereby incorporated by reference. Standard IEC EN 61508 defines four SIL levels of SIL-1 to SIL-4 with higher numbers representing higher amounts of risk reduction. Obtaining a desired SIL rating requires a certain degree of diagnostic coverage for components within a system. The degree of diagnostic coverage is defined according to a percentage likelihood that a failure of a component within a system will be detected. Low diagnostic coverage, for example, may require only a sixty percent (60%) chance that a failure will be detected. In contrast, high diagnostic coverage, required for a SIL 3 rating, may require a ninety-nine percent (99%) chance that a failure will be detected. Mitigation of a risk occurring increases the SIL rating and may be achieved by detecting a failure in a system that may cause a dangerous operating environment before the dangerous operating environment can occur. Therefore, determination of a SIL rating is based, at least in part, on the ability of a system to detect a fault condition and enter a safe state in response to detecting the fault condition.

A safety controller will typically schedule a periodic execution of safety tasks to monitor operation of the controlled system. In order to timely detect a failure of a component within the controlled system, it is desirable to perform the safety tasks frequently. However, the safety controller must also allocate a certain percentage of processing capability for non-safety tasks, such as background communications, user interface exchanges, and the like. The non-safety tasks are typically lower priority than the safety tasks and execute in the available time not allocated to execution of the safety tasks.

One such, non-safety task which occurs on the safety controller is the modification of an application executing on the safety controller. Modification of an application is typically performed in combination with an external computing device, whether mobile, such as a notebook computer or laptop computer, or fixed, such as an industrial computer included in the industrial control application or a desktop computer located remote from the industrial control application. The external computing device may be connected via a dedicated communication cable connected between a processor module on the safety controller and the external computing device, via a local wireless connection, such as a short-range wireless connection, an intranet, or an external network connection made, at least in part, via the Internet. An application executing on the external computing device allows the user to connect to the processor module and view the application, or applications, executing on the processor module. A user may make changes to the application executing on the processor module and then commit those changes to the processor module.

However, modifying the application executing on the processor module is not without certain challenges. Once an industrial control system is installed, a machine or process controlled by the industrial control system may continue execution for extended periods of time, such as weeks or months, until a maintenance window is scheduled. In some applications, it may be desirable to modify the application without shutting down the controlled machine or process and without waiting for a scheduled maintenance window. Thus, a user may connect to the processor module while the processor module is controlling the machine or process.

When the user makes a change to the application executing on the processor module, the duration of time required to commit the change may vary depending on the nature of the change. For example, a simple change may require addition of a single instruction or the change of a memory address utilized in an instruction. The simple change may require minimal processing steps to verify the change is valid and to write the changes to memory, allowing the change to be handled quickly. A more complex change, however, may add a new routine or substantially modify an existing routine. The complex change may require extended processing time to verify the new code has no errors and to write the changes to memory in the processor module. The time required to process and download the complex change may exceed the portion of the periodic safety interval allocated to execution of the background tasks and extend into the next safety interval during which the safety tasks should begin. If the safety task cannot be performed at the desired interval, the safety controller determines that a fault condition has occurred on the processor module, and the safety processor then causes the controlled system to enter a predefined safe operating state. Therefore, despite intending to make a change on the processor module while continuing operation of the controlled machine or process, the safety controller detects a fault condition as a result of making the change and brings the controlled machine or process into the predefined safe operating state.

Thus, it would be desirable to provide an improved system and method for modifying an application during execution on a safety controller.

### BRIEF DESCRIPTION

According to one embodiment of the invention, a method for modifying an application on a safety controller during execution includes receiving an edit request at a first processor module for an application executing in tandem on the first processor module and a second processor module. A change record for the application is prepared in response to the edit request on the first processor module, and the change record is transmitted from the first processor module to the second processor module. A lock is acquired to prevent execution of the application in the first processor module after transmitting the change record to the second processor module. The change record is applied to the application on the first processor module and on the second processor module during the lock of the application in the first processor between cycles of the application, and the lock preventing execution of the application in the first processor module is released when the change record has been applied to the first and second processor modules.

According to another embodiment of the invention, a system for modifying an application on a safety controller during execution includes a first and second memory, a first and second processor, and a dedicated communication interface between the first processor and the second processor. The first memory is configured to store a first set of instructions to perform a communication function and a second set of instructions to perform a safety function. The first processor is in communication with the first memory, and the first processor has a first core operative to execute the communication function and a second core operative to execute the safety function. The second memory is configured to store a first set of instructions to perform a communication function and a second set of instructions to perform a safety function. The second processor is in communication with the second memory, and the second processor has a first core operative to execute the communication function and a second core operative to execute the safety function. The safety function executes on the second core of the first processor in tandem with the safety function executing on the second core of the second processor. The first core of the first processor is further operative to receive an edit request for the safety function executing on the second cores of the first and second processors and to prepare a change record for the safety function corresponding to the edit request. The second core of the first processor is further operative to acquire a lock to prevent execution of the safety function in the first processor, apply the change record to the safety function during the lock of the safety function in the first processor, and release the lock preventing execution of the safety function in the first processor when the change record has been applied to the first and second processors.

According to still another embodiment of the invention, a method for modifying a safety function executing at a periodic interval in an industrial control system includes preparing a change record for the safety function in response to an edit request at a first processing device in the industrial control system and transmitting the change record from the first processing device to a second processing device and to a third processing device in the industrial control system. The combined steps of preparing the change record, transmitting the change record from the first processing device to a second processing device in the industrial control system, and transmitting the change record from the first processing device to a third processing device in the industrial control system execute during execution of the safety function and over multiple periodic intervals for the safety function. The change record is stored in a memory with the second processing device, and the change record is applied to the second processing device and to the third processing device. The steps of storing the change record in the memory and applying the change record to the second processing device and to the third processing device both occur during a single periodic interval for the safety function.

These and other advantages and features of the invention will become apparent to those skilled in the art from the detailed description and the accompanying drawings. It should be understood, however, that the detailed description and accompanying drawings, while indicating preferred embodiments of the present invention, are given by way of illustration and not of limitation. Many changes and modifications may be made within the scope of the present invention without departing from the spirit thereof, and the invention includes all such modifications.

### BRIEF DESCRIPTION OF THE DRAWINGS

Various exemplary embodiments of the subject matter disclosed herein are illustrated in the accompanying drawings in which like reference numerals represent like parts throughout, and in which:
FIG. 1 is a block diagram of an industrial control system according to one embodiment of the present invention;
FIG. 2 is a block diagram further representing aspects of the industrial control system of Fig. 1;
FIG. 3 is a block diagram further representing aspects of the processor module of the industrial control system of Fig. 1;
FIG. 4 is a block diagram further representing aspects of the processor module of another embodiment of the industrial control system;
FIG. 5 is a block diagram further representing aspects of the processor module of another embodiment of the industrial control system;
FIG. 6 is a timing diagram illustrating steps for editing a safety program in the industrial control system of Fig. 3 while the safety program is executing;
FIG. 7 is a block diagram of an industrial control system according to another embodiment of the present invention;
FIG. 8 is a timing diagram illustrating steps for editing a safety program in the industrial control system of Fig. 4 while the safety program is executing; and
FIG. 9 is a timing diagram illustrating steps for editing a safety program in the industrial control system of Fig. 5 while the safety program is executing;

In describing the various embodiments of the invention which are illustrated in the drawings, specific terminology will be resorted to for the sake of clarity. However, it is not intended that the invention be limited to the specific terms so selected and it is understood that each specific term includes all technical equivalents which operate in a similar manner to accomplish a similar purpose. For example, the word "connected," "attached," or terms similar thereto are often used. They are not limited to direct connection but include connection through other elements where such connection is recognized as being equivalent by those skilled in the art.

### DETAILED DESCRIPTION

The various features and advantageous details of the subject matter disclosed herein are explained more fully with reference to the non-limiting embodiments described in detail in the following description.

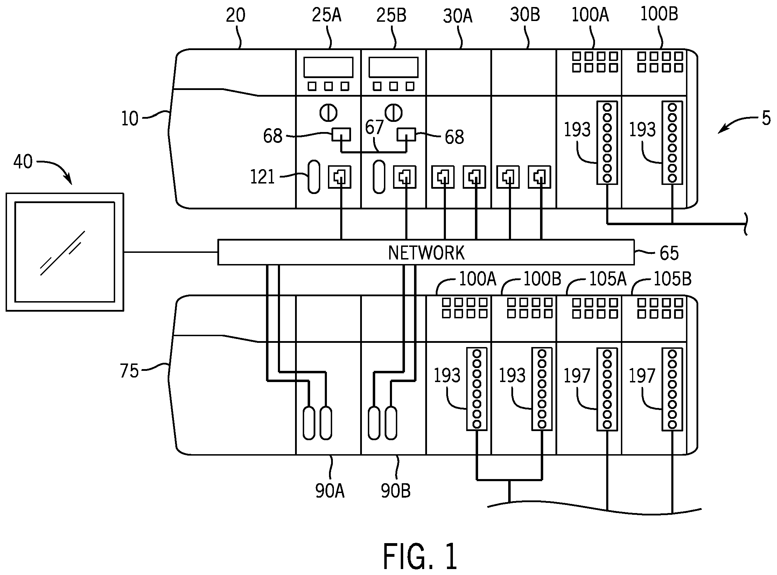

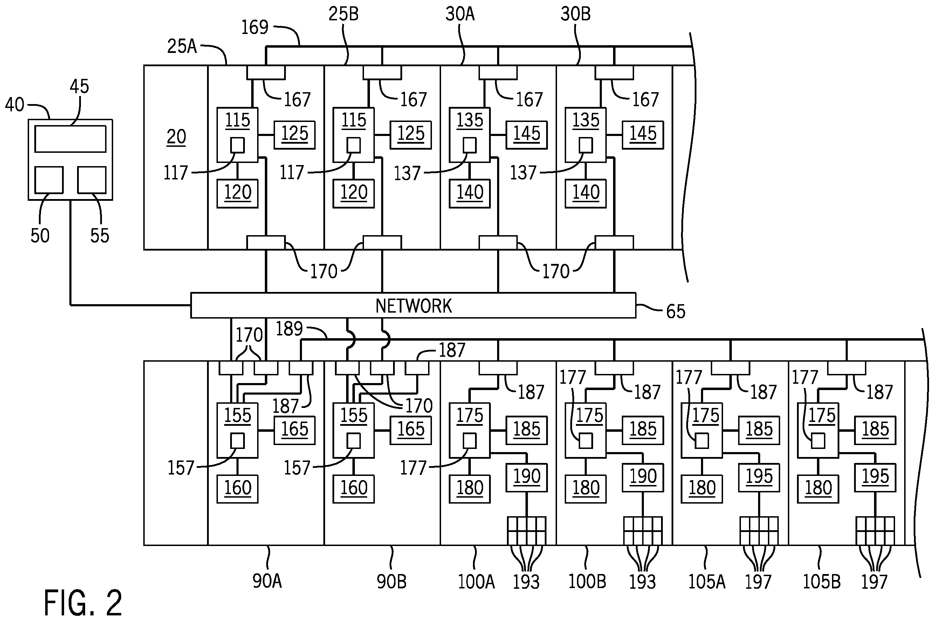

Turning initially to Fig. 1 and Fig. 2, an exemplary safety control system with redundant subsystems is illustrated. The redundant subsystems may be provided to achieve a desired safety rating and/or a desired level of availability. The inputs and outputs are provided to two controllers and each controller monitors operation of the inputs and outputs as well as operation of the other controller to ensure correct operation of the control system 5. The illustrated control system 5 is an exemplary environment incorporating one embodiment of the present invention.

The industrial control system 5 includes a controller chassis10 and a remote Input/Output (IO) chassis 75. As illustrated, the controller chassis 10 is modular and may be made up of numerous different modules. Additional modules may be added or existing modules removed and the controller chassis 10 reconfigured to accommodate the new configuration. Optionally, the controller chassis 10 may have a predetermined and fixed configuration. The controller chassis 10 may have a single backplane or dual backplanes to facilitate communication between modules in the chassis. In the exemplary system shown, the controller chassis 10 includes a power supply module 20, a pair of controller modules (or also referred to as simply "controllers") 25, a pair of network bridge modules 30, and a pair of input modules 100. As used herein, an element will be referred to generally with a reference numeral (e.g., controller 25) when a description applies to each element with that reference numeral. An element will be referred to more specifically with a reference numeral and a following letter (e.g., first controller 25A or second controller 25B) when a description applies to a specific instance of an element.

An operator interface 40 is shown connected to the industrial control system. The operator interface 40 may be permanently connected by the controlled machine or process such as a Human Machine Interface (HMI) or industrial computer, or the operator interface 40 may be removably connected to the controlled machine or process such as a laptop computer, notebook computer, tablet computer, or the like. The operator interface 40 can include a processing device 45 and an input device 50. The input device 50 can include, but is not limited to, a keyboard, touchpad, mouse, track ball, or touch screen. The operator interface can further include an output device 55. The output device 55 can include, but is not limited to, a display, a speaker, or a printer. It is further contemplated that multiple operator interfaces can be distributed about the industrial control system 5. The operator interface 40 may be used to display operating parameters and/or conditions of the controlled machine or process, receive commands from the operator, or change and/or load a control program or configuration parameters. An interface cable connects the operator interface 40 to the network 65 and, in turn, to the controllers 25A, 25B on the controller chassis 10.

The controller chassis 10 is connected to other devices by a network 65 according to the application requirements. A redundant network topology is established by connecting the first network bridge module 30A and the second network bridge module 30B to the network 65 by suitable cables and/or network devices, such as routers, switches, gateways, or the like. The network 65 also connects to the remote chassis 75. It is contemplated that the network cables may be custom cables configured to communicate via a proprietary interface or may be any standard industrial network, including, but not limited to, Ethernet/IP^{®}, DeviceNet^{®}, ControlNet^{®}, or OPC UA^{®}. The network bridge modules 30 and the network 65 are configured to communicate according to the protocol of the network to which it is connected and may be further configured to translate messages between two different network protocols. A dedicated interface cable 67 connects the first processor module 25A and the second processor module 25B. Optionally, a dedicated backplane may be provided between the two slots in which the processor modules 25A, 25B are inserted to provide a dedicated communication channel between the controller modules 25.

The remote chassis 75 may be positioned at varying positions about the controlled machine or process. Further, multiple remote chassis 75 may be utilized according to an application's requirements. The illustrated remote chassis 75 is modular and may be made up of numerous different modules connected together in a chassis or mounted on a rail. Additional modules may be added or existing modules removed and the remote chassis 75 reconfigured to accommodate the new configuration. Optionally, the remote chassis 75 may have a predetermined and fixed configuration. The remote chassis 75 may have a single backplane or dual backplanes to facilitate communication between modules in the chassis. As illustrated, the remote chassis 75 includes a pair of network adapter modules 90, a pair of input modules 100, and a pair of output modules 105. Each network adapter module 90 is connected to the network 65 by a suitable network of cables. Each of the input modules 100 is configured to receive input signals from controlled devices, and each of the output modules 105 is configured to provide output signals to the controlled devices. Optionally, still other modules may be included in a remote chassis. It is understood that the industrial control network, industrial controller, and remote chassis may take numerous other forms and configurations without deviating from the scope of the invention. It should also be understood that an input module 100 and an output module 105 can form an IO module.

Referring next to Fig. 2, a portion of the exemplary industrial control system of Fig. 1 is illustrated in block diagram form. It is contemplated that each of the modules in the system may include a processor and a memory. Within the controller chassis 10, the processor modules 25A, 25B include a processor 115 and a memory 120, and the network bridge modules 30A, 30B include a processor 135 and a memory 140. On the remote chassis 75, the network adapter modules 90A, 90B include a processor 155 and memory 160, and each of the input modules 100A, 100B and output modules 110A, 110B include a processor 175 and memory 180.

The processors 115, 135, 155, 175 are configured to execute instructions and to access or store operating data and/or configuration parameters stored in the corresponding memory 120, 140, 160, 180. The processors 115, 135, 155, 175 are suitable processors according to the module requirements. It is contemplated that the processors 115, 135, 155, 175 may include a single processing device or multiple processing devices executing in parallel and may be implemented in separate electronic devices or incorporated on a single electronic device, such as a field programmable gate array (FPGA) or application specific integrated circuit (ASIC). The processors 115, 135, 155, 175 include random access memory 117, 137, 157, 177 for processing runtime data. The memory devices 120, 140, 160, 180 are non-transitory storage mediums that may be a single device, multiple devices, or may be incorporated in part or in whole within the FPGA or ASIC.

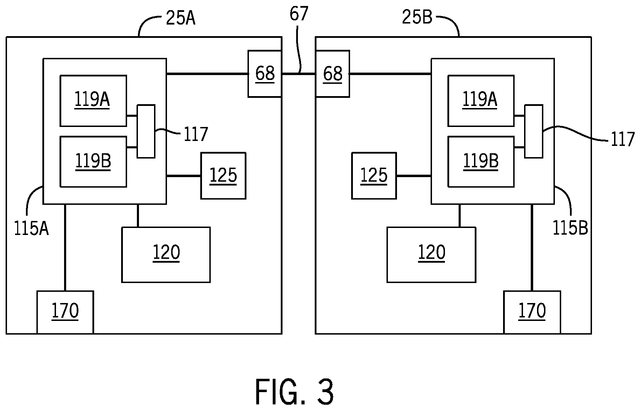

With reference also to Figs. 3-5, the processors 115 in each of the processor modules 25 is a multi-core processor. Turning first to Fig. 3, the processor 115A in the first processor module 25A includes at least a first processing core 119A and a second processing core 119B. Similarly, the processor 115B in the second processor module 25B includes at least a first processing core 119A and a second processing core 119B. Each processor 115 includes memory 117 accessible by each processing core 119A, 119B. A first portion of the memory 117 may be accessible only by the first processing core 119A, a second portion of the memory 117 may be accessible only by the second processing core 119B, and a third portion of the memory 117 may be shared between the two processing cores 119A, 119B. Each processing core 119 is configured to execute a series of instructions, where the instructions are stored in non-transient memory 120 for retention through a power-cycle but may be loaded into the memory 117 on the processor 115 for faster run-time execution. Each processing core 119 may be configured to execute its respective series of instructions either asynchronously or synchronously with the other processing core.

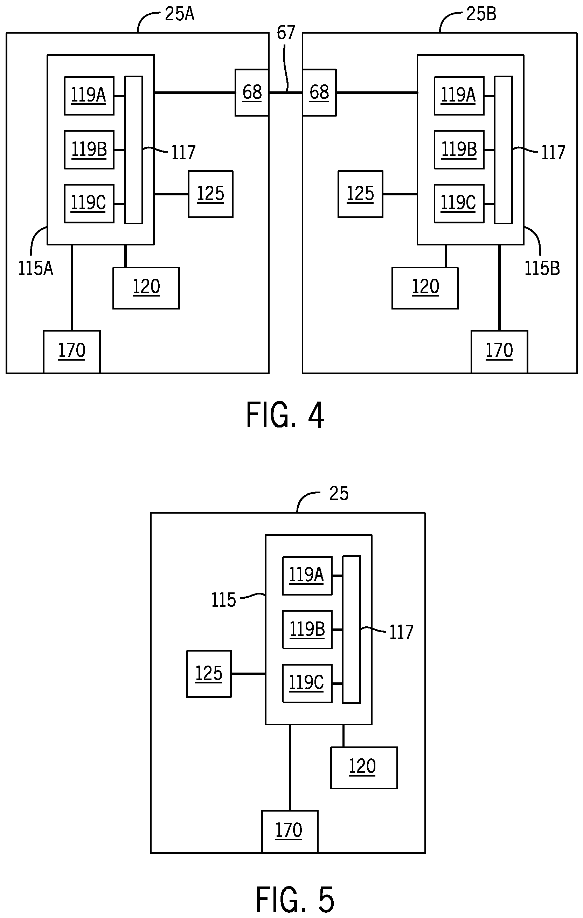

Turning next to Figs. 4 and 5, the processor 115 in each processor module 25 may include at least three processing cores 119. Fig. 4 illustrates an embodiment in which dual processor modules 25 are provided, and Fig. 5 illustrates an embodiment in which a single processor module 25 is provided. Each processor 115 includes a first processing core 119A, a second processing core 119B, and a third processing core 119C. Each processor 115 includes memory 117 accessible by each processing core 119. A first portion of the memory 117 may be accessible only by the first processing core 119A, a second portion of the memory 117 may be accessible only by the second processing core 119B, a third portion of the memory 117 may be accessible only by the third processing core 119C, and a fourth portion of the memory 117 may be shared between the three processing cores 119A, 119B, 119C. Each processing core 119 is configured to execute a series of instructions, where the instructions are stored in non-transient memory 120 for retention through a power-cycle but may be loaded into the memory 117 on the processor 115 for faster run-time execution. Each processing core 119 may be configured to execute its respective series of instructions either asynchronously or synchronously with the other processing core. Although embodiments with either two or three processing cores 119 are shown, the processor 115 may include still other numbers of processing cores 119 according to an application's requirements.

Referring again to Fig. 2, each of the modules also includes a clock circuit. Within the controller chassis 10, the processor modules 25A, 25B include a clock circuit 125, and the network bridge modules 30A, 30B include a clock circuit 145. On the remote chassis 75, the network adapter modules 90A, 90B include a clock circuit 165, and each of the input modules 100A, 100B and output modules 110A, 110B include a clock circuit 185. Each clock circuit 125, 145, 165, 185 is preferably synchronized with the other clock circuits 125, 145, 165, 185 according to, for example, the IEEE-1588 clock synchronization standard. Each clock circuit 125, 145, 165, 185 generates a time signal configurable to report the present time accurate to either microseconds or nanoseconds. Communication between modules mounted in the same chassis or contained within a single housing occurs via a backplane. The controller chassis 10 includes a backplane 169 and backplane connectors 167, and the remote chassis 75 includes a backplane 189 and backplane connectors 187. The backplane 169, 189 may be a single backplane or dual backplanes and include a corresponding backplane connector 167, 187. Modules communicating via network media include ports 170 configured to process the corresponding network protocol. The input module 100 includes input terminals 193 configured to receive the input signals from the controlled devices. The input module 100 also includes any associated logic circuitry 190 and internal connections required to process and transfer the input signals from the input terminals 193 to the processor 175. Similarly, each output module 105 includes output terminals 197 configured to transmit the output signals to the controlled devices. The output module 105 also includes any associated logic circuitry 195 and internal connections required to process and transfer the output signals from the processor 175 to the output terminals 197.

In order to communicate via the network 65, two end points establish a connection between each other. A connection is the transport layer mechanism in an industrial protocol to transfer bi-directional data between two end points typically at a given periodic interval. Some connection types do not transfer data at periodic intervals, but instead, transfer data either on occurrence of an event or in response to a programmatic request/response mechanism. Some connections transfer data in only one direction while in the reverse direction only a heartbeat indication is sent to keep the connection alive. But, in general, connections transfer data in both directions.

A connection is opened by a connection open service request from a connection originator module to a connection target module through zero or more intermediate modules via messages sent over backplane(s) and/or network(s). The connection originator module is usually a controller module in a controller chassis or a human machine interface (HMI). The connection target module may be, for example, an IO module, a motor drive module, another controller module, network adapter module, or a network bridge module in the same chassis as controller module or in a remote chassis. The intermediate modules may be one or more of a network bridge module, network adapter module, and/or other network devices in the network infrastructure 65. The connection open request message contains parameters defining the connection such as a connection type, data size to transfer in each direction, a duration of a periodic interval at which the message is transmitted, a connection timeout duration, an end-to-end path from the originator module to the target module through intermediate modules, and the like. These parameters are used to allocate resources (e.g., CPU bandwidth, memory, and network bandwidth) to service the connection at runtime on a module associated with the connection. When resources are successfully allocated on the modules associated with a connection, a success response is conveyed back from the target module to the originator module in a reverse direction from the connection open request, and the connection is operational for runtime data transfer. If the resources cannot be allocated on one of the modules associated with a connection or if one of the modules cannot communicate the connection open request message to the next module in the path, then a failure response is returned to the originator module from the module at which the connection open request failed. As used herein, the term connection originator module refers to a physical module in the industrial control system 5 that is issuing a connection open service request. The term connection target module refers to a physical module in the industrial control system 5 that is receiving the connection open service request.

Once a connection is opened, it can be closed either through a connection close service request from the originator module to the target module of the connection through any intermediate modules that are part of the connection. Optionally, the connection may also be closed through a runtime connection timeout mechanism. During runtime, every module that is part of a connection monitors data reception from its upstream module(s) in one or both directions as appropriate for an end module or an intermediate module, respectively, and when data is not received in the monitored direction for a length of time equal to the connection timeout duration, the module at which the connection timeout occurred will close the connection to recover allocated resources. A connection timeout may happen as a result of a module failure or of a communication failure in a network or a backplane.

In operation, the safety control system 5 executes to control an industrial machine or process and to achieve a desired safety rating while controlling the machine or process. With reference again to Fig. 1, a first processor module 25A and a second processor module 25B may be provided in a single chassis 10. The first processor module 25A is configured to execute both control tasks and safety tasks. The second processor module 25B is configured to execute safety tasks in cooperation with the first processor module. The second processor module 25B may also be configured to execute the control tasks, or a portion thereof, executing in the first processor module 25A as a redundant controller. Optionally, the second processor module 25B may be configured to execute control tasks unique from those executing in the first processor module 25A.

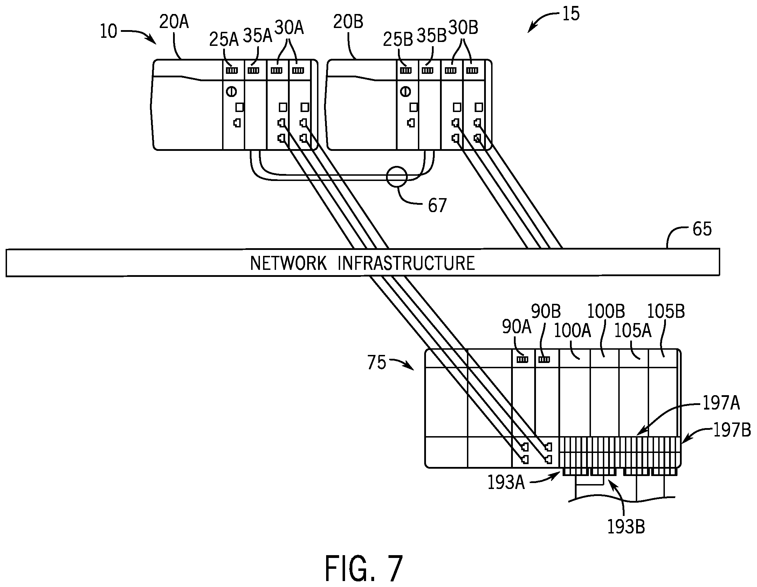

Turning also to Fig. 7, an alternate embodiment of a safety control system is illustrated. The first processor module 25A is in a first chassis 10, and the second processor module 25B is in a second chassis 15. Each processor module 25 is configured to be a safety controller and may include a single processor module 25, as illustrated, or a pair of processor modules in each chassis. The embodiment illustrated in Fig. 7 provides an industrial control system which may operate as both a higher availability controller and a safety controller, where the processor modules 25 in each chassis are configured to provide a desired safety rating and the controlled machine or process may be controlled by the safety controller in one chassis or in tandem by the safety controllers in both chassis.

One safety task, also referred to herein as a safety function, performed by the first and second processor modules 25A, 25B may be to monitor execution of the control program executing on the first processor module 25A. A parallel program may execute on the second processor module 25B and data from the parallel program is compared to data from the control program executed by the first processor module. If the data matches, the second processor module 25B determines that the control program is functioning properly. Another safety function performed by the processor modules 25 may be to receive input signals fed back to an input module which correspond to an output signal from an output module. The safety function may read a desired value to be output from each channel of the output module and compare the desired value to the input signal to verify correct operation of the output channel. Still other diagnostic and safety functions may be executed within the safety processing core and/or safety processor to achieve the desired SIL rating.

As illustrated in Figs. 3-5, multiple embodiments of the invention include different configurations of the processor modules 25 and numbers of processing cores 119 present within a processor module. In Fig. 3, the first processor module 25A includes a first processor 115A with a first processor core 119A and a second processor core 119B. The second processor module 25B includes a second processor 115B with a first processor core 119A and a second processor core 119B. The first processor core 119A in each processor 115 is configured to execute background tasks, communication functions, and/or control functions. The second processor core 119B in each processor is configured to execute one or more safety functions. The safety functions are executed in tandem at a periodic interval. The safety tasks executed on the second processor module 25B mirror those executed on the first processor module 25A such that execution of the safety tasks on each processor module 25 may be compared by each processor module 25 to verify correct operation. The clock circuit 125 in each processor module 25 executes an oscillator to generate a free-running timer. At power-up and/or at periodic intervals, a register in the clock circuit 125 and/or memory 120 in the processor module 25 is synchronized with a master time to correlate the value of the free-running timer with a present time. The processor module 25 is able to maintain a record of the present time by monitoring the value in the free-running timer and adding the value to the register correlating the value of the free-running timer with a present time.

The clock circuit 125 and/or a low-level application executing on the processor module 25 generates an interrupt or other signal to begin execution of the safety tasks at the periodic interval. The periodic interval may be in a range from about ten milliseconds to about two hundred milliseconds (10-200 ms). The frequency at which safety tasks is performed is a function of the duration of time required to complete execution of the safety tasks and of the required safety rating. Performing safety tasks at a higher frequency increases the likelihood that a failure of a component within the industrial control system 5 will be detected before the failure causes unexpected operation of system. The periodic interval must also allow some processing time for non-safety tasks within the processor module 25. Thus, a first portion of the safety task period is allocated for performing the safety tasks, and a second portion of the safety task period is allocated for performing other tasks. If the periodic interval for executing safety tasks is set to ten milliseconds, it is desirable to keep the first portion of the safety task period to about five to six milliseconds (5-6 ms) to provide sufficient time for other tasks to execute. Thus, other tasks must be completed within about four to five milliseconds (4-5 ms) in order to not exceed the total processing capability of the processor module 25.

With reference next to Fig. 4, the first processor module 25A includes a first processor 115A with a first processor core 119A, a second processor core 119B, and a third processor core 119C. The second processor module 25B includes a second processor 115B with a first processor core 119A, a second processor core 119B, and a third processor core 119C. The first processor core 119A in each processor 115 is configured to execute background tasks, communication functions, and the like. The second processor core 119B in each processor is configured to execute control functions as well as one or more safety functions. The third processor core 119C in each processor may be configured to execute control functions but is primarily configured to execute safety functions in tandem with the second processor core 119B. The safety functions are executed in tandem on both processor cores 119B, 119C at a periodic interval. The safety tasks executed on the third processor core 119C mirror those executed on the second processor core 119B such that execution of the safety tasks on each processor core may be compared by the processor cores 119B, 119C to verify correct operation. The addition of a third core permits safety functions executing within one processor module 25 that may require both processor modules 25 of Fig. 3. Including a pair of processor modules 25A, 25B where each processor module has three processing cores 119 provides for a safety controller which may also execute in a higher availability configuration. Each processor module 25A, 25B may be configured to provide the desired level of safety control such that if one of the processor modules experiences a fault condition, the other processor module may continue operating the industrial control system 5.

Turning next to Fig. 5, a single processor module 25 is illustrated, where the single processor module may still provide safety control. The processor module 25 includes a processor 115 with a first processor core 119A, a second processor core 119B, and a third processor core 119C. The first processor core 119A is configured to execute background tasks, communication functions, and the like. The second processor core 119B is configured to execute control functions as well as one or more safety functions. The third processor core 119C may be configured to execute control functions but is primarily configured to execute safety functions in tandem with the second processor core 119B. The safety functions are executed in tandem on both processor cores 119B, 119C at a periodic interval. The safety tasks executed on the third processor core 119C mirror those executed on the second processor core 119B such that execution of the safety tasks on each processor core may be compared by the processor cores 119B, 119C to verify correct operation. The addition of a third core permits safety functions executing within one processor module 25 such that a single processor module may be utilized for safety control.

For discussion herein, it will be assumed that a first processing device and a second processing device each execute a safety task, or tasks, in tandem at a periodic interval. At least one additional processing device executes a communication task and is in communication with an external computing device. As discussed in the various embodiments above, a first processing device may be a first processor module, a first processor, or a first processor core. Similarly, a second processing device may be a second processor module, a second processor, or a second processor core. The additional processing device may be an additional processor module, such as a dedicated communications module, an additional processor, or an additional processor core. In each configuration, a pair of processing devices are configured to execute safety tasks in tandem, and an additional processing device is configured to execute other tasks and, in particular, communication tasks.

As discussed above, modification of an application is typically performed in combination with an external computing device, whether mobile, such as a notebook computer or laptop computer, or fixed, such as an industrial computer or an HMI included in the industrial control system 5 or a desktop computer located remote from the industrial control system. The external computing device may be connected via a dedicated communication cable connected between a processor module on the safety controller and the external computing device, via a local wireless connection, such as a short-range wireless connection, an intranet, or an external network connection made, at least in part, via the Internet. An application executing on the external computing device allows the user to connect to the processor module and view the application, or applications, executing on the processor module. A user may make changes to the application executing on the processor module and then commit those changes to the processor module.

The system and method for modifying an application during execution of the application on a safety controller ensures that the application may be modified while utilizing only the second portion of the safety task period and without interrupting execution of the safety task period. Prior methods for editing applications during execution may require hundreds of milliseconds or up to a few seconds to apply desired changes to the safety task. However, if the safety task period is set to ten milliseconds and the second portion of the safety task period is four to five milliseconds, the next cycle of safety tasks would need to begin execution before application of the desired changes is able to complete. The safety controller would detect that the safety tasks did not begin execution and put the industrial control system 5 into a safe operating state. As a result, the changes are not applied while continuing execution of the desired safety tasks.

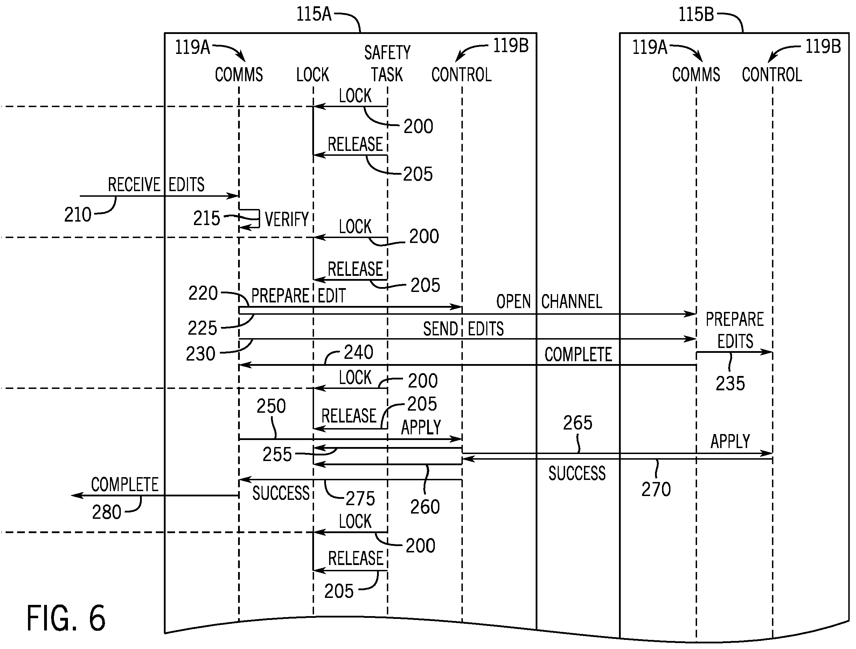

Turning next to Fig. 6, the steps utilized according to one embodiment of the invention for modifying an application during execution of the application on a safety controller while utilizing only the second portion of the safety task period is illustrated. For the steps illustrated in Fig. 6, a pair of processors 115 are illustrated, where each processor 115 includes a first processor core 119A, and a second processor core 119B. The second processor core 119B in the first processor 115A is a first processing device, the second processor core 119B on the second processor 115B is a second processing device, and the first processor cores 119A in each of the processors 115 is an additional processing device. Within Fig. 6, the safety task period is illustrated with a first safety task period 203A, a second safety task period 203B, and a third safety task period 203C. It is understood, that this safety task period 203 continues executing repeatedly beyond the illustrated time interval.

Within each safety task period 203, the processor 115 allocates a first portion of the safety task period 203 for execution of safety tasks. At the start of the first portion of each safety task period 203, a lock 200 of safety data is performed. According to one aspect of the invention, the core 119 performing the safety task may request the lock of the safety data. According to another aspect of the invention, the clock circuit and/or low-level application executing on the processor module 25 to generate the interrupt or other signal to begin execution of the safety tasks may also request the lock of the safety data. The lock of the safety data is a signal to a memory management unit (MMU), mutex flag, or some other device to prevent other applications from accessing memory in which safety data is stored during execution of the safety tasks. This lock prevents delays in execution of the safety tasks if, for example, the safety task may otherwise need to wait for access to shared memory presently being accessed by another application. Upon completion of the safety tasks, a release 205 of the lock is performed. Thus, the duration of time between the lock 200 and the release 205 illustrated during each safety task period 203 corresponds to the first portion of the safety task period. The remainder of time after the release 205 of the lock and the start of the next safety task period corresponds to the second portion of the safety task period.

At step 210, the communication core 119A receives an indication of edits being present for the safety functions. At step 215, the communication core 119A is illustrated as verifying the edits. Although illustrated as a single command and verification step, the edits may be received over an extended duration as a series of single edits, sets of multiple edits, or in a single communication including all of the edits. Verification may be performed as individual edits are received or in a single step when all of the edits have been received. The receive edits step 210 and the verification step 215 may be performed within one, second portion of the safety task period 203, or the receive edits step 210 and the verification step 215 may be spaced across multiple safety task periods 203 and may execute within multiple second portions of those safety task periods.

When all of the desired edits have been received and verified, the communication core 119A will transfer a change record for those edits to the control core 119B for each of the processors 115. To facilitate updating the application during execution, the change record may include only differences to be applied to the application. By writing only differences to the application, the duration required for updating the application may be reduced. Optionally, the change record may include segments of an application to be updated, where a portion of the segment is unchanged and another portion, or portions, of the segment include desired edits. According to still another option, the change record may include an entire application to be modified, where writing the application in its entirety may be completed faster than updating segments or individual edits within the application.

The change record is transferred from the communication core 119A to each control core at steps 220, 225, and 230 of Fig. 6. In order to transfer the change record from the communication core 119A of the first processor 115A to the control core 119B of the second processor 115B, the two processors must establish a communication channel. At step 225, the communication core 119A in the first processor 115A establishes a dedicated communication connection with the second processor 115B. The communication core 119A in the first processor 115A is configured to interact with the communication core 119A in the second processor 115B. Each communication core 119A executes communication functions, such as identifying an available channel, allocating a required memory resource, assigning a connection identifier for the connection, and the like in order to manage communication functions not only over the dedicated communication interface 67 but also over the network 65. Thus, the two communication cores 119A in each processor 115 are configured to establish and manage connections between devices. Having established a dedicated communication channel for transferring the change record, the communication core 119A of the first processor 115A transfers the change record to the communication core 119A of the second processor 115B, as shown in step 230. The communication core 119A of the second processor 115B, in turn, transmits the change record from the communication core 119A of the second processor 115B to the control core 119B of the second processor, as shown in step 235. Although illustrated as being performed within one, second portion of the safety task period 203, the prepare edit and transfer edit steps may be spaced across multiple safety task periods 203 and may execute within multiple second portions of those safety task periods.

Up to this point, the steps performed for editing the safety functions executing in the safety controller are each executable within the background processing time of the processors 115. Thus, the steps may be performed over multiple second portions of a safety task period 203 without impacting operation of any of the safety functions. The next step in the sequence for editing the safety functions will be to write the desired changes from the change record to the memory storing the instructions for the safety function. In order to prevent interruption to the periodic execution of each safety function, writing the changes must occur within one instance of the second portion of a safety task period 203. At step 250, the communication core 119A in the first processor 115A issues an apply changes command to the control core 119B in the first processor. At step 255, the control core 119B in the first processor issues a lock of the safety data. Locking the safety data will prevent a safety function from accessing safety data and from executing. The lock is applied as a backup measure in the event the application of the change record does not complete before the start of the next safety task period 203. If the application of the change record is not complete, an error in applying the change record will have occurred and it is then desirable to detect such an error and enter a safe operating state. However, if application of the change record completes as expected, the lock, requested at step 255, is released at step 260. According to one aspect of the invention, the entire duration of the lock and application of the change record will complete in less than one millisecond (1 ms).

After requesting the lock of the safety data, the control core 119B of the first processor 115A then initiates application of the change record on both processors 115. The control core 119B commands the change record be stored to memory 120 in the first processor module 25A. The control core 119B in the first processor 115A also utilizes the dedicated communication channel, previously established by the communications core 119A, to command the control core 119B in the second processor 115B to apply changes, as shown in step 265. Although the communication cores 119A initially established the dedicated communication interface between processors 115 and established the connection parameters required for the dedicated communication channel, the communication cores 119A may each make the connection parameters available to the respective control core 119B. The parameters may include, for example, a connection identifier, a connection path, and the like. According to one aspect of the invention, the communication core 119A transmits connection parameters to the control core 119B via a communication bus present on the processor 115. According to another aspect of the invention, the communication core 119A stores the connection parameters in a portion of memory 117 on board the processor 115 or in a portion of memory 120 external from the processor that is accessible by each core 119. In this manner, the communication core 119A may store the connection parameters in memory 117 or 120 when the connection is established and the control core 119B can read the connection parameters to subsequently communicate data between the processors 115 using the dedicated channel. Because each core 119 is part of the same processor 115 and has access to the communication bus, one core 119A, configured to establish communications, may execute the communication function to create a dedicated communication interface and a second core 119B, which cannot establish the communication channel, may still utilize an existing communication channel to communicate between processors 115. When the control core 119B in the second processor 115B receives the command to apply changes, the control core 119B in the second processor 115B commands the change record be stored to memory 120 in the second processor module 25B. The control core 119B in the second processor 115B generates a success message, as show in step 270, indicating the changes have been applied and transmits the success message back to the control core 119B in the first processor 115A. When the control core 119B in the first processor 115A has completed applying changes in the first processor module 25A and receives the success message from the control core 119B in the second processor 115B, the control core 119B in the first processor 115A releases the lock, as shown in step 260. To complete the editing process, the control core 119B in the first processor 115A sends a success message to the communication core 119A, as shown in step 275. The communication core 119A, in turn, sends a change complete message to the external computing device, as shown in step 280.

The above-described process provides an improved system and method for modifying an application during execution on a safety controller by dividing the steps of receiving and verifying edits from a step of actually writing edits to memory. The steps of receiving and verifying edits may require multiple periods of execution for the safety task. By verifying the edits and creating a change record, which is ready for writing to memory, the actual changes may be rapidly stored in memory 120 for the processor module during a non-safety task portion of the safety task period. In addition, utilizing the control cores 119B for handling data transfer will provide a deterministic application of the changes. The control core 119B is primarily responsible for executing safety tasks. The safety tasks are confined to execution during the first portion of each safety task period 203. The control cores 119B, by design, have spare processing capabilities during the non-safety portion of each safety task period 203. In contrast, the communication cores 119A are responsible for managing all of the communications for each processor module 25 including managing both dedicated communications between each processor module 25 and all other traffic present on the network 65 and received at the safety controller 25. Utilizing the control cores 119B to communicate over the dedicated communication channel, which is previously established, ensures that the application of the change record occurs within a desired interval and typically in less than one millisecond.

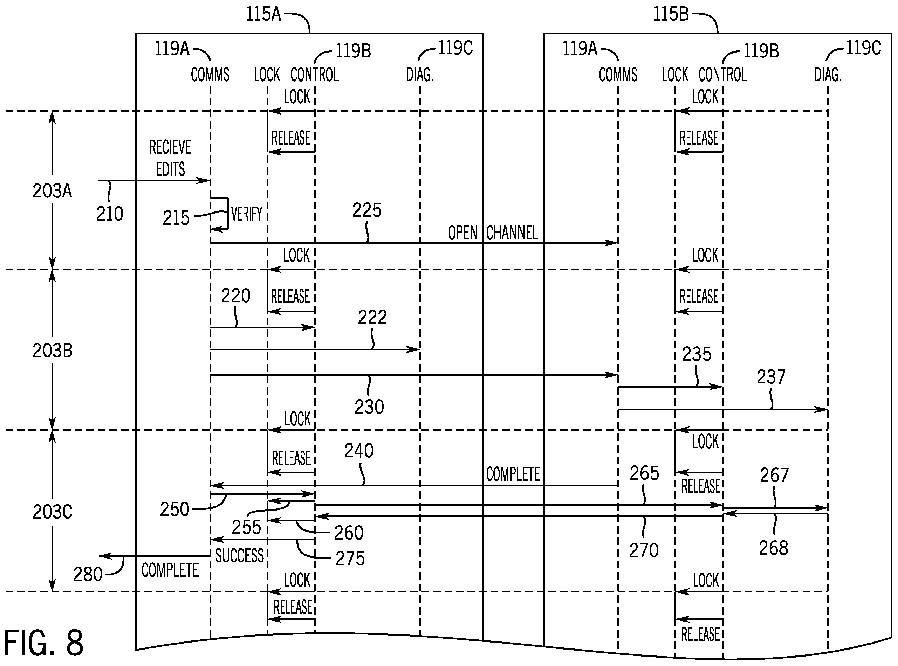

Turning next to Fig. 8, the steps utilized according to another embodiment of the invention for modifying an application during execution of the application on a safety controller while utilizing only the second portion of the safety task period is illustrated. For the steps illustrated in Fig. 8, a pair of processors 115 are illustrated, where each processor 115 includes a first processor core 119A, a second processor core 119B, and a third processor core 119C. The second processor core 119B in each processor 115 is a first processing device, and the third processor core 119C in each processor 115 is a second processing device. The first processor cores 119A in each of the processors 115 is an additional processing device. The industrial control system 5 is a safety controller with high availability. Identical safety tasks are executing on each of the second and third processor cores 119B, 119C for both the first and second processors 115A, 115B. Within Fig. 8, the safety task period is illustrated with a first safety task period 203A, a second safety task period 203B, and a third safety task period 203C. It is understood, that this safety task period 203 continues executing repeatedly beyond the illustrated time interval.

The steps illustrated in Fig. 8 are similar to those discussed in Fig. 6. However, in addition to updating the second processor cores 119B in both processors 115, the first processor core 119A in the first processor 115A is responsible for coordinating the update of the safety functions also executing in the third processor cores 119C on both processors 115. At step 210, the communication core 119A receives an indication of edits being present for the safety functions. At step 215, the communication core 119A is illustrated as verifying the edits. Although illustrated as a single command and verification step, the edits may be received over an extended duration as a series of single edits, sets of multiple edits, or in a single communication including all of the edits. Verification may be performed as individual edits are received or in a single step when all of the edits have been received. The receive edits step 210 and the verification step 215 may be performed within one, second portion of the safety task period 203, or the receive edits step 210 and the verification step 215 may be spaced across multiple safety task periods 203 and may execute within multiple second portions of those safety task periods.

When all of the desired edits have been received and verified, the communication core 119A will transfer a change record for those edits to the second processing core 119B and the third processing core 119C for each of the processors 115. To communicate with the second processor 115B, the first processor 115A opens a communication channel with the second processor. At step 225, the communication core 119A in the first processor 115A establishes a dedicated communication connection with the second processor 115B. This is a similar process to that discussed above with respect to Fig. 6 and further illustrates that steps in the editing process may be performed in different orders. At step 220, the communication core 119A of the first processor 115A transmits the change record from the communication core 119A of the first processor 115A to the second core 119B of the first processor. At step 222, the communication core 119A of the first processor 115A similarly transmits the change record from the communication core 119A of the first processor 115A to the third core 119C of the first processor. At step 230, the communication core 119A of the first processor 115A transmits the change record between processors 115A, 115B. At step 235, the communication core 119A of the second processor 115B transmits the change record from the communication core 119A of the second processor 115B to the second core 119B of the second processor. At step 237, the communication core 119A of the second processor 115B similarly transmits the change record from the communication core 119A of the second processor 115B to the third core 119C of the second processor. When the second processor 115B has received the change records at both processor cores and is ready to apply edits, a complete message is transmitted back to the first processor 115A, as shown at step 240. Having transferred the change record from the first processing core 119A of the first processor 115A to each of the other processing cores executing safety functions, the changes may now be applied.

Up to this point, the steps performed for editing the safety functions are each executable within the background processing time of the processors 115. Thus, the steps may be performed over multiple second portions of a safety task period 203 without impacting operation of any of the safety functions. The next step in the sequence for editing the safety functions will be to write the desired changes from the change record to the memory storing the instructions for the safety function. In order to prevent interruption to the periodic execution of each safety function, writing the changes must occur within one instance of the second portion of a safety task period 203. At step 250, the communication core 119A in the first processor 115A issues an apply changes command to the second processing core 119B in the first processor. At step 255, the second processing core 119B in the first processor issues a lock of the safety data. Locking the safety data will prevent a safety function from accessing safety data and from executing. The lock is applied as a backup measure in the event the application of the change record does not complete before the start of the next safety task period 203. If the application of the change record is not complete, an error in applying the change record will have occurred and it is then desirable to detect such an error and enter a safe operating state. However, if application of the change record completes as expected, the lock, requested at step 255, is released at step 260. According to one aspect of the invention, the entire duration of the lock and application of the change record will complete in less than one millisecond (1 ms).

After requesting the lock of the safety data, the second processing core 119B of the first processor 115A then initiates application of the change record on both processors 115. The second processing core 119B commands the change record be stored to memory 120 in the first processor module 25A. These changes to the safety functions are available to both the second processing core 119B and the third processing core 119C. Optionally, changes may be applied to the third portion of memory 117, if required, for the third processing core 119C, and the second processing core 119B of the first processor 115A takes any additional steps required to apply changes for the third processing core 119C. The second processing core 119B in the first processor 115A also utilizes the dedicated communication channel, previously established by the communications core 119A, to command the second processing core 119B in the second processor 115B to apply changes, as shown in step 265. Although the communication cores 119A initially established the dedicated communication interface between processors 115 and established the connection parameters required for the dedicated communication channel, the communication cores 119A may each make the connection parameters available to the respective second processing cores 119B. The parameters may include, for example, a connection identifier, a connection path, and the like. According to one aspect of the invention, the communication core 119A transmits connection parameters to the second processing core 119B via a communication bus present on the processor 115. According to another aspect of the invention, the communication core 119A stores the connection parameters in a portion of memory 117 on board the processor 115 or in a portion of memory 120 external from the processor that is accessible by each core 119. In this manner, the communication core 119A may store the connection parameters in memory 117 or 120 when the connection is established and the second processing core 119B can read the connection parameters to subsequently communicate data between the processors 115 using the dedicated channel. Because each core 119 is part of the same processor 115 and has access to the communication bus, one core 119A, configured to establish communications, may execute the communication function to create a dedicated communication interface and a second core 119B, which cannot establish the communication channel, may still utilize an existing communication channel to communicate between processors 115.

When the second processing core 119B in the second processor 115B receives the command to apply changes, the second processing core 119B in the second processor 115B commands the change record be stored to memory 120 in the second processor module 25B. These changes to the safety functions are available to both the second processing core 119B and the third processing core 119C. Optionally, changes may be applied to the third portion of memory 117, if required, for the third processing core 119C. At steps 267 and 268, the second processing core 119B of the second processor 115B takes any additional steps required to apply changes for the third processing core 119C. The second processing core 119B in the second processor 115B then generates a success message, as show in step 270, indicating the changes have been applied and transmits the success message back to the second processing core 119B in the first processor 115A. When the second processing core 119B in the first processor 115A has completed applying changes in the first processor module 25A and receives the success message from the second processing core 119B in the second processor 115B, the second processing core 119B in the first processor 115A releases the lock, as shown in step 260. To complete the editing process, the second processing core 119B in the first processor 115A sends a success message to the communication core 119A, as shown in step 275. The communication core 119A, in turn, sends a change complete message to the external computing device, as shown in step 280.

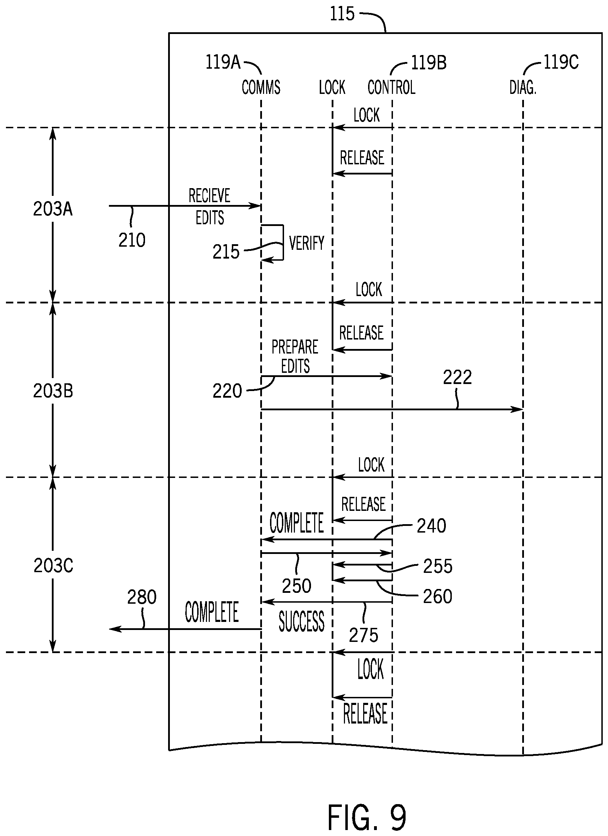

Turning next to Fig. 9, the steps utilized according to another embodiment of the invention for modifying an application during execution of the application on a safety controller while utilizing only the second portion of the safety task period is illustrated. For the steps illustrated in Fig. 9, a single processor 115 is illustrated, where the processor 115 includes a first processor core 119A, a second processor core 119B, and a third processor core 119C. The second processor core 119B is a first processing device, the third processor core 119C is a second processing device, and the first processor core 119A is an additional processing device. The industrial control system 5 is a single safety controller. Identical safety tasks are executing on each of the second and third processor cores 119B, 119C. Within Fig. 9, the safety task period is illustrated with a first safety task period 203A, a second safety task period 203B, and a third safety task period 203C. It is understood, that this safety task period 203 continues executing repeatedly beyond the illustrated time interval.

The steps illustrated in Fig. 9 are similar to those discussed in Fig. 8. However, the first processor core 119A is only responsible for coordinating the update of the safety functions executing in the second and third processor cores 119B, 119C on the same processor. At step 210, the communication core 119A receives an indication of edits being present for the safety functions. At step 215, the communication core 119A is illustrated as verifying the edits. Although illustrated as a single command and verification step, the edits may be received over an extended duration as a series of single edits, sets of multiple edits, or in a single communication including all of the edits. Verification may be performed as individual edits are received or in a single step when all of the edits have been received. The receive edits step 210 and the verification step 215 may be performed within one, second portion of the safety task period 203, or the receive edits step 210 and the verification step 215 may be spaced across multiple safety task periods 203 and may execute within multiple second portions of those safety task periods.

When all of the desired edits have been received and verified, the communication core 119A will transfer a change record for those edits to the second processing core 119B and to the third processing core 119C. At step 220, the communication core 119A of the processor 115 transmits the change record from the communication core 119A to the second core 119B of the processor. At step 222, the communication core 119A of the processor 115 similarly transmits the change record from the communication core 119A to the third core 119C of the processor. Having transferred the change record from the first processing core 119A of the processor 115 to each of the other processing cores executing safety functions, the changes may now be applied.

Up to this point, the steps performed for editing the safety functions are each executable within the background processing time of the processor 115. Thus, the steps may be performed over multiple second portions of a safety task period 203 without impacting operation of any of the safety functions. The next step in the sequence for editing the safety functions will be to write the desired changes from the change record to the memory storing the instructions for the safety function. In order to prevent interruption to the periodic execution of each safety function, writing the changes must occur within one instance of the second portion of a safety task period 203. At step 250, the communication core 119A issues an apply changes command to the second processing core 119B. At step 255, the second processing core 119B issues a lock of the safety data. Locking the safety data will prevent a safety function from accessing safety data and from executing. The lock is applied as a backup measure in the event the application of the change record does not complete before the start of the next safety task period 203. If the application of the change record is not complete, an error in applying the change record will have occurred and it is then desirable to detect such an error and enter a safe operating state. However, if application of the change record completes as expected, the lock, requested at step 255, is released at step 260. According to one aspect of the invention, the entire duration of the lock and application of the change record will complete in less than one millisecond (1 ms).

After requesting the lock of the safety data, the second processing core 119B then initiates application of the change record on both processing cores 119B, 119C. The second processing core 119B commands the change record be stored to memory 120 in the processor module 25. These changes to the safety functions are available to both the second processing core 119B and the third processing core 119C. Optionally, changes may be applied to the third portion of memory 117, if required, for the third processing core 119C. The second processing core 119B takes any additional steps required to apply changes for the third processing core 119C. When the changes are applied, the second processing core 119B release the lock, as shown in step 260. To complete the editing process, the second processing core 119B sends a success message to the communication core 119A, as shown in step 275. The communication core 119A, in turn, sends a change complete message to the external computing device, as shown in step 280.

It should be understood that the invention is not limited in its application to the details of construction and arrangements of the components set forth herein. The invention is capable of other embodiments and of being practiced or carried out in various ways. Variations and modifications of the foregoing are within the scope of the present invention. It also being understood that the invention disclosed and defined herein extends to all alternative combinations of two or more of the individual features mentioned or evident from the text and/or drawings. All of these different combinations constitute various alternative aspects of the present invention. The embodiments described herein explain the best modes known for practicing the invention and will enable others skilled in the art to utilize the invention.

In the preceding specification, various embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

### The following is a list of further preferred embodiments of the invention:

Embodiment 1. A method for modifying an application on a safety controller during execution, the method comprising the steps of:
receiving an edit request at a first processor module for an application executing in tandem on the first processor module and a second processor module;
preparing a change record for the application in response to the edit request on the first processor module;
transmitting the change record from the first processor module to the second processor module;
acquiring a lock to prevent execution of the application in the first processor module after transmitting the change record to the second processor module;
applying the change record to the application on the first processor module and on the second processor module during the lock of the application in the first processor between cycles of the application; and
releasing the lock preventing execution of the application in the first processor module when the change record has been applied to the first and second processor modules.

Embodiment 2. The method of embodiment 1, wherein the first processor module includes a first communication core and a first control core and wherein the second processor module includes a second communication core and a second control core.

Embodiment 3. The method of embodiment 1, further comprising the steps of:
establishing a communication channel between the first communication core and the second communication core via a dedicated communication interface; and
transmitting the change record from the first communication core to the second communication core via the communication channel over the dedicated communication interface.

Embodiment 4. The method of embodiment 3, wherein the step of applying the change record to the application on the first processor module and on the second processor module further comprises the steps of:
transmitting an apply edit command from the first control core to the second control core via the communication channel over the dedicated communication interface;
receiving an apply edit confirmation at the first control core from the second control core via the communication channel over the dedicated communication interface; and
applying the change record in the first processor module with the first control core.

Embodiment 5. The method of embodiment 1, wherein:
the first processor module includes a safety task period,
the first processor module and the second processor module execute the application in tandem once during a first portion of the safety task period, and
at least one other task executes on the first processor module and the second process module during a second portion of the safety task period.

Embodiment 6. The method of embodiment 5, wherein the steps of preparing the change record for the application in response to the edit request on the first processor module and transmitting the change record from the first processor module to the second processor module are performed during a plurality of the safety task periods.

Embodiment 7. The method of embodiment 6, wherein the steps of acquiring the lock to prevent execution of the application in the first processor module after transmitting the change record to the second processor module, applying the change record to the application on the first processor module and on the second processor module during the lock of the application in the first processor module, and releasing the lock preventing execution of the application in the first processor module when the change record has been applied to the first and second processor modules are performed during one second portion of the safety task period.

Embodiment 8. The method of embodiment 1 further comprising the step of verifying a plurality of requested edits have no errors.

Embodiment 9. A system for modifying an application on a safety controller during execution, comprising:
a first memory configured to store a first set of instructions to perform a communication function and a second set of instructions to perform a safety function;
a first processor in communication with the first memory, the first processor having a first core operative to execute the communication function and a second core operative to execute the safety function;
a second memory configured to store a first set of instructions to perform a communication function and a second set of instructions to perform a safety function;
a second processor in communication with the second memory, the second processor having a first core operative to execute the communication function and a second core operative to execute the safety function; and
a dedicated communication interface between the first processor and the second processor, wherein:
   the safety function executes on the second core of the first processor in tandem with the safety function executing on the second core of the second processor;
   the first core of the first processor is further operative to:
      receive an edit request for the safety function executing on the second cores of the first and second processors, and
      prepare a change record for the safety function corresponding to the edit request;
      the second core of the first processor is further operative to:
         acquire a lock to prevent execution of the safety function in the first processor;
         apply the change record to the safety function during the lock of the safety function in the first processor; and
         release the lock preventing execution of the safety function in the first processor when the change record has been applied to the first and second processors.

Embodiment 10. The system of embodiment 9, wherein:
the first core of the first processor is further operative to establish a communication channel between the first core of the first processor and the first core of the second processor via the dedicated communication interface, and
the first core of the first processor is further operative to transmit the change record from the first core of the first processor to the first core of the second processor via the communication channel over the dedicated communication interface.

Embodiment 11. The system of embodiment 10, wherein the second core of the first processor is further operative to:
transmit an apply edit command from the second core of the first processor to the second core of the second processor via the communication channel over the dedicated communication interface; and
receive an apply edit confirmation from the second core in the second processor via the communication channel over the dedicated communication interface.

Embodiment 12. The system of embodiment 11, wherein the second core in the second processor is further operative to:
apply the change record in the second processor responsive to receiving the apply edit command from the first processor; and
generate the apply edit confirmation for transmission to the first processor.

Embodiment 13. The system of embodiment 9, further comprising:
a first processor module including the first memory and the first processor, the first processor module further comprising a first clock circuit configured to start execution of the safety function at a periodic interval; and
a second processor module including the second memory and the second processor, the second processor module further comprising a second clock circuit configured to start execution of the safety function at the periodic interval, wherein:
   the second core of the first processor and the second core of the second processor execute the safety function in tandem once during a first portion of the periodic interval, and
   at least one other task executes on the second core of the first processor and the second core of the second processor during a second portion of each periodic interval.

Embodiment 14. The system of embodiment 13, wherein the first core of the first processor is operative to receive the edit request and prepare the change record during a plurality of periodic intervals for the safety function.

Embodiment 15. The system of embodiment 14, wherein the second core of the first processor is operative to acquire the lock, apply the change record, and release the lock during one second portion of the periodic interval.

Embodiment 16. The system of embodiment 9, wherein the first control core in the first processor is further operative to verify that a plurality of requested edits have no errors.

Embodiment 17. A method for modifying a safety function executing at a periodic interval in an industrial control system, the method comprising the steps:
preparing a change record for the safety function in response to an edit request at a first processing device in the industrial control system;
transmitting the change record from the first processing device to a second processing device in the industrial control system;
transmitting the change record from the first processing device to a third processing device in the industrial control system, wherein the combined steps of preparing the change record, transmitting the change record from the first processing device to a second processing device in the industrial control system, and transmitting the change record from the first processing device to a third processing device in the industrial control system execute during execution of the safety function and over a plurality of the periodic intervals for the safety function;
storing the change record in a memory with the second processing device; and
applying the change record to the second processing device and to the third processing device, wherein the steps of storing the change record in the memory and applying the change record to the second processing device and to the third processing device both occur during a single periodic interval for the safety function.

Embodiment 18. The method of embodiment 17, wherein the first processing device, the second processing device, and the third processing device are each processing cores of a processor in a processor module.

Embodiment 19. The method of embodiment 17, wherein:
the industrial control system includes a first processor module and a second processor module;
the first processor module includes the first processing device and the second processing device;
the third processor module includes the third processing device and a fourth processing device;
the method further comprises the steps of:
   establishing a communication channel between the first processing device and the fourth processing device via a dedicated communication interface; and
   transmitting the change record from the first processing device to the fourth processing device via the communication channel over the dedicated communication interface.

Embodiment 20. The method of embodiment 19, wherein the step of applying the change record to the second processing device and to the third processing device further comprises the steps of:
transmitting an apply edit command from the second processing device to the third processing device via the communication channel; and
receiving an apply edit confirmation at the second processing device from the third processing device via the communication channel.

## Claims

1. A method for modifying an application on a safety controller during execution, the method comprising the steps of:
receiving an edit request at a first processor module for an application executing in tandem on the first processor module and a second processor module;
preparing a change record for the application in response to the edit request on the first processor module;
transmitting the change record from the first processor module to the second processor module;
acquiring a lock to prevent execution of the application in the first processor module after transmitting the change record to the second processor module;
applying the change record to the application on the first processor module and on the second processor module during the lock of the application in the first processor between cycles of the application; and
releasing the lock preventing execution of the application in the first processor module when the change record has been applied to the first and second processor modules.

2. The method of one of claims 1 or 2, wherein the first processor module includes a first communication core and a first control core and wherein the second processor module includes a second communication core and a second control core.

3. The method of claim 1, further comprising the steps of:
establishing a communication channel between the first communication core and the second communication core via a dedicated communication interface; and
transmitting the change record from the first communication core to the second communication core via the communication channel over the dedicated communication interface.

4. The method of claim 3, wherein the step of applying the change record to the application on the first processor module and on the second processor module further comprises the steps of:
transmitting an apply edit command from the first control core to the second control core via the communication channel over the dedicated communication interface;
receiving an apply edit confirmation at the first control core from the second control core via the communication channel over the dedicated communication interface; and
applying the change record in the first processor module with the first control core.

5. The method of one of claims 1 to 4, wherein:
the first processor module includes a safety task period,
the first processor module and the second processor module execute the application in tandem once during a first portion of the safety task period, and
at least one other task executes on the first processor module and the second process module during a second portion of the safety task period, and/or
wherein the steps of preparing the change record for the application in response to the edit request on the first processor module and transmitting the change record from the first processor module to the second processor module are performed during a plurality of the safety task periods.

6. The method of claim 5, wherein the steps of acquiring the lock to prevent execution of the application in the first processor module after transmitting the change record to the second processor module, applying the change record to the application on the first processor module and on the second processor module during the lock of the application in the first processor module, and releasing the lock preventing execution of the application in the first processor module when the change record has been applied to the first and second processor modules are performed during one second portion of the safety task period.

7. The method of one of claims 1 to 6 further comprising the step of verifying a plurality of requested edits have no errors.

8. A system for modifying an application on a safety controller during execution, comprising:
a first memory configured to store a first set of instructions to perform a communication function and a second set of instructions to perform a safety function;
a first processor in communication with the first memory, the first processor having a first core operative to execute the communication function and a second core operative to execute the safety function;
a second memory configured to store a first set of instructions to perform a communication function and a second set of instructions to perform a safety function;
a second processor in communication with the second memory, the second processor having a first core operative to execute the communication function and a second core operative to execute the safety function; and
a dedicated communication interface between the first processor and the second processor, wherein:
the safety function executes on the second core of the first processor in tandem with the safety function executing on the second core of the second processor;
the first core of the first processor is further operative to:
receive an edit request for the safety function executing on the second cores of the first and second processors, and
prepare a change record for the safety function corresponding to the edit request;
the second core of the first processor is further operative to:
acquire a lock to prevent execution of the safety function in the first processor;
apply the change record to the safety function during the lock of the safety function in the first processor; and
release the lock preventing execution of the safety function in the first processor when the change record has been applied to the first and second processors.

9. The system of claim 8, wherein:
the first core of the first processor is further operative to establish a communication channel between the first core of the first processor and the first core of the second processor via the dedicated communication interface, and
the first core of the first processor is further operative to transmit the change record from the first core of the first processor to the first core of the second processor via the communication channel over the dedicated communication interface.

10. The system of claim 8 or 9, wherein the second core of the first processor is further operative to:
transmit an apply edit command from the second core of the first processor to the second core of the second processor via the communication channel over the dedicated communication interface; and
receive an apply edit confirmation from the second core in the second processor via the communication channel over the dedicated communication interface, and/or
wherein the second core in the second processor is further operative to:
apply the change record in the second processor responsive to receiving the apply edit command from the first processor; and
generate the apply edit confirmation for transmission to the first processor.

11. The system of one of claims 8 to 10, further comprising:
a first processor module including the first memory and the first processor, the first processor module further comprising a first clock circuit configured to start execution of the safety function at a periodic interval; and
a second processor module including the second memory and the second processor, the second processor module further comprising a second clock circuit configured to start execution of the safety function at the periodic interval, wherein:
the second core of the first processor and the second core of the second processor execute the safety function in tandem once during a first portion of the periodic interval, and
at least one other task executes on the second core of the first processor and the second core of the second processor during a second portion of each periodic interval.

12. The system of claim 11, wherein the first core of the first processor is operative to receive the edit request and prepare the change record during a plurality of periodic intervals for the safety function, and/or
wherein the second core of the first processor is operative to acquire the lock, apply the change record, and release the lock during one second portion of the periodic interval.

13. The system of one of claims 8 to 11, wherein the first control core in the first processor is further operative to verify that a plurality of requested edits have no errors.

14. A method for modifying a safety function executing at a periodic interval in an industrial control system, the method comprising the steps:
preparing a change record for the safety function in response to an edit request at a first processing device in the industrial control system;
transmitting the change record from the first processing device to a second processing device in the industrial control system;
transmitting the change record from the first processing device to a third processing device in the industrial control system, wherein the combined steps of preparing the change record, transmitting the change record from the first processing device to a second processing device in the industrial control system, and transmitting the change record from the first processing device to a third processing device in the industrial control system execute during execution of the safety function and over a plurality of the periodic intervals for the safety function;
storing the change record in a memory with the second processing device; and
applying the change record to the second processing device and to the third processing device, wherein the steps of storing the change record in the memory and applying the change record to the second processing device and to the third processing device both occur during a single periodic interval for the safety function, and/or
wherein the first processing device, the second processing device, and the third processing device are each processing cores of a processor in a processor module.

15. The method of claim 14, wherein:
the industrial control system includes a first processor module and a second processor module;
the first processor module includes the first processing device and the second processing device;
the third processor module includes the third processing device and a fourth processing device;
the method further comprises the steps of:
establishing a communication channel between the first processing device and the fourth processing device via a dedicated communication interface; and
transmitting the change record from the first processing device to the fourth processing device via the communication channel over the dedicated communication interface, and/or
wherein the step of applying the change record to the second processing device and to the third processing device further comprises the steps of:
transmitting an apply edit command from the second processing device to the third processing device via the communication channel; and
receiving an apply edit confirmation at the second processing device from the third processing device via the communication channel.
